# EUROPÄISCHE PATENTANMELDUNG

(11) **EP 1 905 788 A2**
(43) Veröffentlichungstag der Anmeldung: **02.04.2008**
(21) Anmeldenummer: 07018083.1
(22) Anmeldetag: 14.09.2007
(51) Int. Cl.: C08G 18/08, C08G 18/12, C08G 18/28, C08G 18/38, C08G 18/42, C08J 5/08, C03C 25/32

(54) **Schlichtezusammensetzung**

(30) Priorität: 29.09.2006 DE 102006046649
(71) Anmelder: Bayer MaterialScience AG, 51368 Leverkusen (DE)
(72) Erfinder: Rische, Thorsten, Dr., 59423 Unna (DE); Münzmay, Thomas, Dr., 41539 Dormagen (DE); Blum, Harald, Dr., 51375 Leverkusen (DE); Feller, Thomas, 42659 Solingen (DE)

(57) **Zusammenfassung**

Die Erfindung betrifft Polyurethan-Polyharnstoff Dispersionen mit Amidstruktureinheiten sowie deren Herstellung und Verwendung als Sclichtezusammensetzung.

## Beschreibung

Die Erfindung betrifft Polyurethan-Polyharnstoff-Dispersionen mit Amidstruktureinheiten sowie deren Herstellung und Verwendung als Schlichtezusammensetzung.

Bei der Beschlichtung von Glas- und Kohlefasern werden, wie z.B. in der EP-A 792 900 beschrieben, Polyurethan-Polyharnstoff Dispersionen (PUR-Dispersionen) und Vernetzer als Bindemittelkomponenten in der Schlichtezusammensetzung verwendet.

Glasfaserverstärkte Polyamide vereinen eine hohe Steifigkeit und Festigkeit mit einer extremen Schlagzähigkeit und sind somit robust gegen mechanischer Beanspruchung. Die Beschichtung von solchen glasfaserverstärkten Polyamiden bereitet jedoch in der Regel Probleme, da die Oberfläche heterogen ist und sich somit Poren und Risse bilden. Darüber hinaus kann es zu Haftungsstörungen kommen. Die bislang im Stand der Technik beschriebenen Schlichtezusammensetzungen, die sich für die Herstellung von Glas- oder Kohlefasern eignen, verbessern die Verstärkungseigenschaften der in Polyamid eingearbeiteten Fasern nur unzureichend.

Die Aufgabe der vorliegenden Erfindung bestand daher in der Bereitstellung von Glasfaserschlichten, die die Schlagzähigkeit der glasfaserverstärkten Polyamide 6 und Polyamide 6,6 verbessern und die Nachteile des Standes der Technik überwinden.

Es wurde nun gefunden, dass Glasfasern beschichtet mit wässrigen Schlichten, die sowohl PUR-Polymere auf Basis von speziellen, mindestens dihydroxyfunktionellen Polyamidpolyolen mit mindestens 2 Amidgruppen, als auch gegebenenfalls hydrophile Gruppen enthaltende bzw. in Wasser dispergierbare bzw. in Wasser dispergierte blockierte Polyisocyanat-Vernetzer enthalten, ausgezeichnete Verstärkungseigenschaften im Kunststoffcompound, insbesondere in Polyamid 6 und Polyamid 6,6 zeigen.

In der EP-A 0 595 281 werden wasserdispergierbare, polyamidmodifizierte Polyurethane zur Herstellung von Automobillacken, enthaltend unter anderem ein Polyamidmakromonomer, hergestellt aus Säureanhydriden bzw. Säurehalogeniden und Diaminen bzw. Aminoalkoholen, beschrieben. Nachteilig an diesen Systemen ist, dass die Herstellung der Polyamidmakromonomere sehr aufwendig ist und die resultierenden Polyamidmakromonomere immer noch sehr schwer löslich in Wasser sind. Eine Eignung dieser Verbindungen zur Herstellung von Glasfaserschlichten wird nicht beschrieben.

US-A 6,455,632 beschreibt wässrige Polyurethandispersionen mit sekundären Amidgruppen. Diese werden hergestellt durch Reaktion von beispielsweise Isocyanaten mit speziellen hydroxyfunktionellen Monoamiden. Das resultierende Polymer geht dann Vernetzungsreaktionen mit Melamin-Formaldehydharzen, Harnstoffharzen, N-methylolacrylamideemulsionen oder Isobutoxymethylacrylamidemulsionen ein. Die Dispersionen sind für hitzehärtbare Lacke, Beschichtungen und Dichtmassen geeignet. Amidverbindungen die zwei oder mehr Amidstruktureinheiten enthalten werden nicht beschreiben, ebenso nicht die besondere Eignung der Amidgruppen enthaltenden Polyurethan-Dispersionen als Glasfaserschlichten.

Gegenstand der vorliegenden Erfindung sind daher wässrige Polyurethan-Polyharnstoff-Polymer Dispersionen (PUR-Polymere) enthaltend Struktureinheiten gemäß Formel (I) 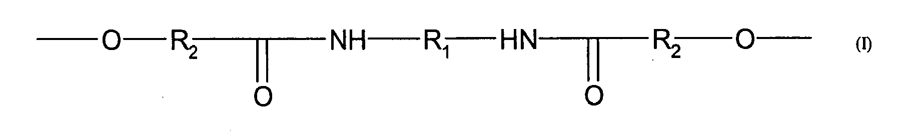 in welcher
- R1: ein aliphatischer oder cycloaliphatischer Rest mit 2 bis 18 C-Atomen und
- R2: ein aliphatischer Rest mit 3 bis 5 C-Atomen ist.

Das Gerüst des Polyurethans enthält dabei mindestens 0,5 Gew.-%, bevorzugt 0,75 bis 10 Gew.-%, besonders bevorzugt 0,9 bis 5,0 Gew.-% Amidgruppen (berechnet als (CO)NH).

Ebenfalls Gegenstand der vorliegenden Erfindung sind Schlichtezusammensetzungen enthaltend die erfindungsgemäßen wässrigen PUR-Polymer-Dispersionen (I) und
(II) blockierte Polyisocyanate, deren Isocyanatgruppen zu mindestens 50 % blockiert sind und die gegebenenfalls hydrophiliert sind,
(III) gegebenenfalls weitere in Wasser dispergierbare, emulgierbare oder lösliche Polymere sowie
(IV) Hilfs- und Zusatzstoffe ausgewählt aus der Gruppe der Haftvermittler, Gleitmittel, Antistatika, Farbstoffe, Pigmente, Verlaufsmittel, Licht- und Alterungsschutzmittel oder UV-Absorber.

Die Polyurethan-Polyharnstoff-Polymere (PUR-Polymere) der erfindungsgemäßen Dispersionen enthalten als Aufbaukomponenten
I.1) Polyisocyanate,
I.2a) polymere Polyole mit zahlenmittleren Molekulargewichten von 200 bis 8000 g/mol,
I.2b) Polyamidpolyolen der allgemeinen Formel (II) 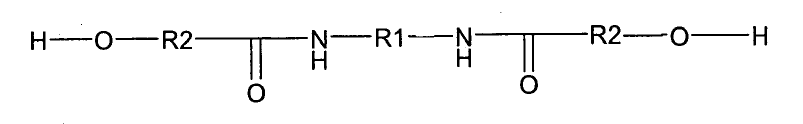 in welcher
   - R1: ein aliphatischer oder cycloaliphatischer Rest mit 2 bis 18 C-Atomen und
   - R2: ein aliphatischer Rest mit 3 bis 5 C-Atomen ist.
I.3) niedermolekulare Verbindungen des Molgewichts 62 bis 400 die in Summe über zwei oder mehr Hydroxyl- und/oder Aminogruppen verfügen,
I.4) gegebenenfalls Verbindungen, die über eine Hydroxy- oder Aminogruppe verfügen sowie
I.5) mindestens ein oder mehrere Verbindungen ausgewählt aus der Gruppe der isocyanatreaktiven, ionisch oder potentiell ionisch hydrophilierenden Verbindungen und/oder
I.6) isocyanatreaktiven, nichtionisch hydrophilierenden Verbindungen.

Geeignete Polyisocyanate der Komponente I.1) sind die dem Fachmann an sich bekannten aromatischen, araliphatischen, aliphatischen oder cycloaliphatischen Polyisocyanate. Beispiele geeigneter Polyisocyanate sind 1,4-Butylendiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis-(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat, 1,5-Naphthylendiisocyanat, 2,4'- oder 4,4'-Diphenylmethandiisocyanat, 1,3-und 1,4-Bis-(2-isocyanato-prop-2-yl)-benzol (TMXDI), 1,3-Bis(isocyanato-methyl)benzol (XDI), (S)-Alkyl-2,6-diisocyanato-hexanoate oder (L)-Alkyl-2,6-diisocyanatohexanoate.

Anteilig können auch Polyisocyanate mit einer Funktionalität ≥ 2 verwendet werden. Hierzu gehören modifizierte Diisocyanate mit Uretdion-, Isocyanurat-, Urethan-, Allophanat-, Biuret-, Iminooxadiazindion- und/oder Oxadiazintrionstruktur sowie nicht-modifizierte Polyisocyanate mit mehr als 2 NCO-Gruppen pro Molekül z.B. 4-Isocyanatomethyl-1,8-octandiisocyanat (Nonantriisocyanat) oder Triphenylmethan-4,4',4"-triisocyanat.

Bevorzugt handelt es sich um Polyisocyanate oder Polyisocyanatgemische der vorstehend genannten Art mit ausschließlich aliphatisch und/oder cycloaliphatisch gebundenen Isocyanatgruppen mit einer mittleren Funktionalität von 2 bis 4, bevorzugt 2 bis 2,6 und besonders bevorzugt 2 bis 2,4.

Besonders bevorzugt sind Hexamethylendiisocyanat, Isophorondiisocyanat, den Isomeren des Bis-(4,4'-isocyanatocyclohexyl)methan sowie deren Mischungen.

Als Verbindungen I.2a) einsetzbare polymere Polyole weisen ein Molekulargewicht Mn von 400 bis 8000 g/mol, bevorzugt von 400 bis 6000 g/mol und besonders bevorzugt von 600 bis 3000 g/mol auf. Ihre Hydroxylzahl beträgt 22 bis 400 mg KOH/g, bevorzugt 30 bis 200 mg KOH/g und besonders bevorzugt 40 bis 160 mg KOH/g und weisen eine OH-Funktionalität von 1,5 bis 6, bevorzugt von 1,8 bis 3 und besonders bevorzugt von 1,9 bis 2,1 auf.

Polyole im Sinne der vorliegenden Erfindung sind die in der Polyurethanlacktechnologie bekannten organischen Polyhydroxylverbindungen, wie beispielsweise die üblichen Polyesterpolyole, Polyacrylatpolyole, Polyurethanpolyole, Polycarbonatpolyole, Polyetherpolyole, Polyesterpolyacrylatpolyole sowie Polyurethanpolyacrylatpolyole, Polyurethanpolyesterpolyole, Polyurethanpolyetherpolyole, Polyurethanpolycarbonatpolyole, Polyesterpolycarbonatpolyole, Phenol/-Formaldehydharze, allein oder in Mischungen. Bevorzugt sind Polyesterpolyole.

Gut geeignete Beispiele für Polyesterpolyole sind die an sind die bekannten Polykondensate aus Di- sowie gegebenenfalls Tri,- und Tetraolen und Di- sowie gegebenenfalls Tri- und Tetra)carbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden. Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3) Butandiol(1,4), Hexandiol(1,6) und Isomere, Neopentylglykol oder Hydroxypivalinsäureneopenthylglykolester, wobei die drei letztgenannten Verbindungen bevorzugt sind. Als gegebenenfalls mit einzusetzende Polyole sind hier beispielsweise Trimethylolpropan, Glycerin, Erythrit, Pentaerythrit, Triemthylolbenzol oder Trishydroxyethylisocyanurat zu nennen.

Als Dicarbonsäuren kommen beispielsweise in Frage Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbernsteinsäure, 3,3-Diethylglutarsäure, 2,2-Dimethylbernsteinsäure. Anhydride dieser Säuren sind ebenfalls brauchbar, soweit sie existieren. Für die Belange der vorliegenden Erfindung werden die Anhydride infolgedessen durch den Ausdruck "Säure" umfasst. Es können auch Monocarbonsäuren, wie Benzoesäure und Hexancarbonsäure verwendet werden, vorausgesetzt, dass die mittlere Funktionalität des Polyols ≥ als 2 ist. Gesättigte aliphatische oder aromatische Säuren sind bevorzugt, wie Adipinsäure oder Isophthalsäure. Als gegebenenfalls in kleineren Mengen mitzuverwendende Polycarbonsäure sei hier Trimellitsäure genannt.

Hydroxycarbonsäuren, die als Reaktionsteilnehmer bei der Herstellung eines Polyesterpolyols mit endständigen Hydroxylgruppen mitverwendet werden können sind beispielsweise Hydroxycapronsäure, Hydroxybuttersäure, Hydroxydecansäure, Hydroxystearinsäure und dergleichen. Brauchbare Lactone sind u. a. Caprolacton, Butyrolacton und Homologe.

Geeignete Polyamidpolyole I.2b) gemäß Formel (II) werden durch Umsetzung mindestens difunktioneller Amine, wie z.B. Ethylendiamin, 1,2-Propandiamin, 1,3-Propandiamin, 1,4-Butandiamin, 1,3-Butandiamin, 1,2-Butandiamin, Pentandiamin, 1,6-Hexandiamin, 1,8-Octandiamin, C9- bis C-10-Diamine, C13- bis C27-Diamine, 1,4-Cyclohexylmethyldiamin, Amino-3,3,5-trimethyl-5-aminomethyl-cyclohexan (Isophorondiamin), 1,4-Diaminocyclohexan, Bis-(4-aminocyclohexyl)-methan, Diethylentriamin, Nonantriamin, 2,5-Diamino-2,5-dimethylhexan, 1,5-Diamino-2-methylpentan (Dytek^{®} A, Fa DuPont), 2,2,4- und/oder 2,4,4-Trimethyl-1,6-diaminohexan, 1,11-Diaminoundecan, 1,12-Diaminododecan, Laromin^{®} C260 (4,4'-Diamino-3,3'-dimethyl-cyclohexylmethan, BASF AG, DE), Tricyclodecandiamin (TCD-Diamin), 4,4'Methylen-bis-(2,6-diethylcyclohexanamin) höhermolekulare Polyetherpolyamine mit aliphatisch gebundenen, primären Aminogruppen, wie sie beispielsweise unter der Bezeichnung Jeffamin^{®} von der Firma Huntsman vertrieben werden, mit ε-Caprolacton erhalten. Ebenfalls geeignet sind difunktionelle Amine, die zusätzlich andere funktionelle Gruppen, z.B. Hydroxylgruppen enthalten, wie N-hydroxyethyl-ethylendiamin, N-hydroxypropyl-ethylendiamin, N-Hydroxyethylpropandiamin, N-Hydroxyethyl-butandiamin oder N-Hydroxyethyl-hexandiamin.

Ebenfalls geeignet sind Mischungen der genannten mindestens difunktionellen Amine, welche gegebenenfalls weitere funktionelle Gruppen enthalten, z.B. auch mit weiteren difunktionellen Aminen. In untergeordneten Mengen können auch monofunktionelle Amine mitverwendet werden. Der Anteil mindestens difunktioneller Amine muss dann aber mindestens 70% betragen.

Bevorzugt ist die Komponente I.2b) aufgebaut aus Diaminen, die eine primäre und eine sekundäre Aminogruppe aufweisen und ε-Caprolacton.

Besonders bevorzugt enthalten die erfindungsgemäßen PUR-Dispersionen Umsetzungsprodukte aus Verbindungen ausgewählt aus der Gruppe 1,6-Hexamethylendiamin, 2-Methyl-1,5-diaminopentan, 1-Amino-3,3,5-trimethyl-5-aminomethyl-cyclohexan (Isophorondiamin), der Isomeren des Bis-(4-aminocyclohexyl)-methan und deren Mischungen mit ε-Caprolacton.

Zur Herstellung der Amidpolyole wird ein Equivalent Aminogruppen mit 0,9 bis 2,0, bevorzugt mit 1,0 bis 1,3 Äquivalenten ε-Caprolacton umgesetzt. Diese Reaktion kann bei Raumtemperatur bis 200°C, gegebenenfalls unter Zuhilfenahme katalytisch wirkender Substanzen, beispielsweise Zinnverbindungen, tert. Aminoverbindungen, Titantetrabutylat, Trialkylphosphinverbindungen, Hexamethylendisilazan, Benzyltrimethylammoniumhydroxid, sauren Verbindungen wie z.B. para-Toluolsulphonsäure, durchgeführt werden Bevorzugt werden Zinnkatalysatoren eingesetzt, besonders bevorzugt erfolgt die Herstellung ohne Katalysator.

Die zum Aufbau der Polyurethanharze eingesetzten niedermolekularen Polyole I.3) bewirken in der Regel eine Versteifung und oder eine Verzweigung der Polymerkette. Das Molekulargewicht liegt bevorzugt zwischen 62 und 200. Geeignete Polyole können aliphatische, alicyclische oder aromatische Gruppen enthalten. Genannt seien hier beispielsweise die niedermolekularen Polyole mit bis zu etwa 20 Kohlenstoffatomen je Molekül, wie z.B. Ethylenglykol, Diethylenglykol, Triethylenglykol, 1,2-Propandiol, 1,3-Propandiol, 1,4-Butandiol, 1,3-Butylenglykol, Cyclohexandiol, 1,4-Cyclohexandimethanol, 1,6-Hexandiol, Hydrochinondihydroxyethylether, Bisphenol A (2,2-Bis(4-hydroxyphenyl)propan), hydriertes Bisphenol A (2,2-Bis(4-hydroxy-cyclohexyl)propan) sowie deren Mischungen, sowie Trimethylolpropan, Glycerin oder Pentaerythrit. Auch Esterdiole wie z.B. δ-Hydroxybutyl-ε-hydroxy-capronsäureester, ω-Hydroxyhexyl-γ-hydroxybuttersäure-ester, Adipinsäure-(β-hydroxyethyl)ester oder Terephthalsäure-bis(β-hydroxyethyl)-ester können verwendet werden.

Di- oder Polyamine sowie Hydrazide können ebenfalls als Komponente I.3) eingesetzt werden, z.B. Ethylendiamin, 1,2- und 1,3-Diaminopropan, 1,4-Diaminobutan, 1,6-Diaminohexan, Isophorondiamin, Isomerengemisch von 2,2,4- und 2,4,4-Trimethylhexamethylendiamin, 2-Methylpentamethylendiamin, Diethylentriamin, 1,3- und 1,4-Xylylendiamin, α,α,α',α'-Tetramethyl-1,3- und -1,4-xylylendiamin und 4,4-Diaminodicyclohexylmethan, Dimethylethylendiamin, Hydrazin oder Adipinsäuredihydrazid.

Als I.3) kommen prinzipiell auch Verbindungen in Betracht, die aktiven Wasserstoff mit gegenüber NCO-Gruppen unterschiedlicher Reaktivität enthalten, wie Verbindungen, die neben einer primären Aminogruppe auch sekundäre Aminogruppen oder neben einer Aminogruppe (primär oder sekundär) auch OH-Gruppen aufweisen. Beispiele hierfür sind primäre/sekundäre Amine, wie 3-Amino-1-Methylaminopropan, 3-Amino-1-Ethylaminopropan, 3-Amino-1-cyclohexylaminopropan, 3-Amino-1-methylaminobutan, weiterhin Alkanolamine wie N-Aminoethylethanolamin, Ethanolamin, 3-Aminopropanol oder Neopentanolamin. Bevorzugt ist Diethanolamin.

Das Polyurethanharz kann auch gegebenenfalls Bausteine I.4) enthalten, die sich jeweils an den Kettenenden befinden und diese abschließen. Diese Bausteine leiten sich zum einen von monofunktionellen, mit NCO-Gruppen reaktiven Verbindungen ab, wie Monoaminen, insbesondere mono-sekundären Aminen oder Monoalkoholen. Genannt seien hier beispielsweise: Ethanol, n-Butanol, Ethylenglykol-monobutylether, 2-Ethylhexanol, 1-Octanol, 1-Dodecanol, 1-Hexadecanol, Methylamin, Ethylamin, Propylamin, Butylamin, Octylamin, Laurylamin, Stearylamin, Isononyloxypropylamin, Dimethylamin, Diethylamin, Dipropylamin, Dibutylamin, N-Methylaminopropylamin, Diethyl(methyl)aminopropylamin, Morpholin, Piperidin, bzw. geeignete substituierte Derivate davon, Amidamine aus diprimären Aminen und Monocarbonsäuren, Monoketime von diprimären Aminen, primär/tertiäre Amine, wie N,N-Dimethylaminopropylamin und dergleichen.

Unter ionisch bzw. potentiell ionisch hydrophilierenden Verbindungen I.5) werden sämtliche Verbindungen verstanden, die mindestens eine isocyanatreaktive Gruppe sowie mindestens eine Funktionalität, wie z.B. -COOY, -SO₃Y, -PO(OY)₂ (Y beispielsweise = H, NH₄⁺, Metallkation),-NR₂, -NR₃⁺ (R = H, Alkyl, Aryl), aufweisen, die bei Wechselwirkung mit wässrigen Medien ein pH-Wert-abhängiges Dissoziationsgleichgewicht eingeht und auf diese Weise negativ, positiv oder neutral geladen sein kann. Bevorzugte isocyanatreaktive Gruppen sind Hydroxyl- oder Aminogruppen.

Geeignete ionisch oder potentiell ionisch hydrophilierende Verbindungen entsprechend der Definition der Komponente I.5) sind z.B. Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und ihre Salze wie Dimethylolpropionsäure, Dimethylolbuttersäure, Hydroxypivalinsäure, N-(2-Aminoethyl)-β-alanin, 2-(2-Amino-ethylamino)-ethansulfonsäure, Ethylendiamin-propyl- oder -butylsulfonsäure, 1,2- oder 1,3-Propylendiamin-β-ethylsulfonsäure, Äpfelsäure, Zitronensäure, Glykolsäure, Milchsäure, Glycin, Alanin, Taurin, Lysin, 3,5-Diaminobenzoesäure, ein Additionsprodukt von IPDI und Acrylsäure (EP-A 0 916 647, Beispiel 1) und dessen Alkali- und/oder Ammoniumsalze; das Addukt von Natriumbisulfit an Buten-2-diol-1,4, Polyethersulfonat, das propoxylierte Addukt aus 2-Butendiol und NaHSO₃, z.B. beschrieben in der DE-A 2 446 440 (Seite 5-9, Formel I-III) sowie Verbindungen, die in kationische Gruppen überführbare, z.B. Amin-basierende, Bausteine wie N-Methyl-diethanolamin als hydrophile Aufbaukomponenten enthalten. Weiterhin kann Cyclohexylaminopropansulfonsäure (CAPS) wie z.B. in der WO-A 01/88006 als Verbindung entsprechend der Definition der Komponente I.5) verwendet werden.

Bevorzugte ionische oder potentielle ionische Verbindungen I.5) sind solche, die über Carboxy-oder Carboxylat- und/oder Sulfonatgruppen und/oder Ammoniumgruppen verfügen. Besonders bevorzugte ionische Verbindungen I.5) sind solche, die Carboxyl- und/oder Sulfonatgruppen als ionische oder potentiell ionische Gruppen enthalten, wie die Salze von N-(2-Aminoethyl)-β-alanin, der 2-(2-Amino-ethylamino-)ethansulfonsäure oder des Additionsproduktes von IPDI und Acrylsäure (EP-A 0 916 647, Beispiel 1) sowie der Dimethylolpropionsäure.

Geeignete nichtionisch hydrophilierende Verbindungen entsprechend der Definition der Komponente I.6) sind z.B. Polyoxyalkylenether, die mindestens eine Hydroxy- oder Aminogruppe enthalten. Diese Polyether enthalten einen Anteil von 30 Gew.-% bis 100 Gew.-% an Bausteinen, die vom Ethylenoxid abgeleitet sind.

Nichtionisch hydrophilierende Verbindungen sind beispielsweise auch einwertige, im statistischen Mittel 5 bis 70, bevorzugt 7 bis 55 Ethylenoxideinheiten pro Molekül aufweisende Polyalkylenoxidpolyetheralkohole, wie sie in an sich bekannter Weise durch Alkoxylierung geeigneter Startermoleküle zugänglich sind (z.B. in Ullmanns Encyclopädie der technischen Chemie, 4. Auflage, Band 19, Verlag Chemie, Weinheim S. 31-38).

Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylether, wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole. Besonders bevorzugt wird Diethylenglykolmonobutylether als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen handelt es sich entweder um reine Polyethylenoxidpolyether oder gemischte Polyalkylenoxidpolyether, deren Alkylenoxideinheiten zu mindestens 30 mol-%, bevorzugt zu mindestens 40 mol-% aus Ethylenoxideinheiten bestehen. Bevorzugte nichtionische Verbindungen sind monofunktionelle gemischte Polyalkylenoxidpolyether, die mindestens 40 mol-% Ethylenoxid- und maximal 60 mol-% Propylenoxideinheiten aufweisen.

Für die PUR-Polymere (I) werden bevorzugt eine Kombination aus ionischen und nicht-ionischen Hydrophilierungsmitteln entsprechend den Definitionen der Komponenten I.5) und I.6) verwendet. Besonders bevorzugt sind Kombinationen aus nichtionischen und anionischen Hydrophilierungsmitteln.

Bevorzugt werden 5 bis 45 Gew.-% Komponente I.1), 50 bis 90 Gew.-% Komponente I.2), wobei sich I.2) aus den Komponente I.2a) und I.2b) zusammensetzt, 1 bis 30 Gew.-% der Summe von Verbindungen I.3) und I.4), maximal bis 12 Gew.-% Komponente I.5), maximal bis 15 Gew.-% Komponente I.6) eingesetzt, wobei die Summe von I.5) und I.6) 0,1 bis 27 Gew.-% beträgt und sich die Summe aller Komponenten zu 100 Gew.-% addiert.

Besonders bevorzugt werden 10 bis 40 Gew.-% Komponente I.1), 60 bis 85 Gew.-% Komponente I.2), wobei sich I.2) aus den Komponente I.2a) und I.2b) zusammensetzt, 1 bis 25 Gew.-% der Summe von Verbindungen I.3) und I.4), maximal bis 10 Gew.-% Komponente I.5), maximal bis 10 Gew.-% Komponente I.6) eingesetzt, wobei die Summe von I.5) und I.6) 0,1 bis 20 Gew.-% beträgt und sich die Summe aller Komponenten zu 100 Gew.-% addiert.

Ganz besonders bevorzugt werden 15 bis 40 Gew.-% Komponente I.1), 60 bis 82 Gew.-% Komponente I.2), wobei sich I.2) aus den Komponente I.2a) und I.2b) zusammensetzt, 1 bis 20 Gew.-% der Summe von Verbindungen I.3), maximal bis 8 Gew.-% Komponente I.5), maximal bis 10 Gew.-% Komponente I.6) eingesetzt, wobei die Summe von I.5) und I.6) 0,1 bis 18 Gew.-% beträgt und sich die Summe aller Komponenten zu 100 Gew.-% addiert.

Die erfindungsgemäßen Beschichtungsmittel enthalten PUR-Polymere (I), die in Form ihrer wässrigen PUR-Dispersion (I) eingesetzt werden.

Das Verfahren zur Herstellung der wässrigen PUR-Dispersion (I) kann in einer oder mehreren Stufen in homogener oder bei mehrstufiger Umsetzung, teilweise in disperser Phase durchgeführt werden. Nach vollständig oder teilweise durchgeführter Polyaddition aus I.1) - I.6) erfolgt ein Dispergier-, Emulgier- oder Lösungsschritt. Im Anschluss erfolgt gegebenenfalls eine weitere Polyaddition oder Modifikation in disperser Phase.

Zur Herstellung der wässrigen PUR-Dispersionen (I) können alle aus dem Stand der Technik bekannten Verfahren wie z.B. Prepolymer-Mischverfahren, Acetonverfahren oder Schmelzdipergierverfahren verwendet werden. Bevorzugt wird die PUR-Dispersion (I) nach dem Aceton-Verfahren hergestellt.

Für die Herstellung der PUR-Dispersion (I) nach dem Aceton-Verfahren werden üblicherweise die Bestandteile I.2a) bis I.6), die keine primären oder sekundären Aminogruppen aufweisen dürfen und die Polyisocyanatkomponente I.1) zur Herstellung eines isocyanatfunktionellen Polyurethan-Prepolymers ganz oder teilweise vorgelegt und gegebenenfalls mit einem mit Wasser mischbaren aber gegenüber Isocyanatgruppen inerten Lösungsmittel verdünnt und auf Temperaturen im Bereich von 50 bis 120°C aufgeheizt. Zur Beschleunigung der Isocyanatadditionsreaktion können die in der Polyurethan-Chemie bekannten Katalysatoren eingesetzt werden. Bevorzugt ist Dibutylzinndilaurat.

Geeignete Lösungsmittel sind die üblichen aliphatischen, ketofunktionellen Lösemittel wie z.B. Aceton, Butanon, die nicht nur zu Beginn der Herstellung, sondern gegebenenfalls in Teilen auch später zugegeben werden können. Bevorzugt sind Aceton und Butanon.

Anschließend werden die gegebenenfalls zu Beginn der Reaktion noch nicht zugegebenen Bestandteile von I.1) - I.6) zudosiert.

Bei der Herstellung des Polyurethan-Prepolymeren beträgt das Stoffmengenverhältnis von Isocyanatgruppen zu mit Isocyanat reaktiven Gruppen 1,0 bis 3,5, bevorzugt 1,1 bis 3,0, besonders bevorzugt 1,1 bis 2,5.

Die Umsetzung der Komponenten I.1) - I.6) zum Prepolymer erfolgt teilweise oder vollständig, bevorzugt aber vollständig. Es werden so Polyurethan-Prepolymere, die freie Isocyanatgruppen enthalten, in Substanz oder in Lösung erhalten.

Nach oder während der Herstellung der Polyurethan-Prepolymere erfolgt, falls dies noch nicht in den Ausgangsmolekülen durchgeführt wurde, die teilweise oder vollständige Salzbildung der anionisch und/oder kationisch dispergierend wirkenden Gruppen. Im Falle anionischer Gruppen werden dazu Basen wie tertiäre Amine, z.B. Trialkylamine mit 1 bis 12, bevorzugt 1 bis 6 C-Atomen in jedem Alkylrest eingesetzt. Beispiele hierfür sind Trimethylamin, Triethylamin, Methyldiethylamin, Tripropylamin oder Diisopropylethylamin. Die Alkylreste können beispielsweise auch Hydroxylgruppen tragen, wie bei den Dialkylmonoalkanol-, Alkyldialkanol- und Trialkanolaminen. Als Neutralisationsmittel sind gegebenenfalls auch anorganische Basen, wie Ammoniak oder Natrium- bzw. Kaliumhydroxid einsetzbar. Bevorzugt sind Triethylamin, Triethanolamin, Dimethylethanolamin oder Diisopropylethylamin.

Die Stoffmenge der Basen liegt zwischen 50 und 100 Gew.-%, bevorzugt zwischen 70 und 100 Gew.-% der Stoffmenge der anionischen Gruppen. Im Falle kationischer Gruppen werden Schwefelsäuredimethylester, Phosphorsäure oder Bernsteinsäure eingesetzt. Werden nur nichtionisch hydrophilierte Verbindungen I.6) mit Ethergruppen verwendet, entfällt der Neutralisationsschritt. Die Neutralisation kann auch gleichzeitig mit der Dispergierung erfolgen, in dem das Dispergierwasser bereits das Neutralisationsmittel enthält.

Im Anschluss wird in einem weiteren Verfahrensschritt, falls noch nicht oder nur teilweise geschehen das erhaltene Prepolymer mit Hilfe von aliphatischen Ketonen wie Aceton oder Butanon gelöst.

Anschließend werden mögliche NH₂- und/oder NH-funktionelle Komponenten mit den noch verbliebenen Isocyanatgruppen umgesetzt. Diese Kettenverlängerung/-terminierung kann dabei entweder in Lösungsmittel vor dem Dispergieren, während des Dispergierens oder in Wasser nach dem Dispergieren durchgeführt werden. Bevorzugt wird die Kettenverlängerung vor der Dispergierung in Wasser durchgeführt.

Werden zur Kettenverlängerung Verbindungen entsprechend der Definition von I.5) mit NH₂- oder NH-Gruppen eingesetzt, erfolgt die Kettenverlängerung der Prepolymere bevorzugt vor der Dispergierung.

Der Kettenverlängerungsgrad, also das Äquivalentverhältnis von NCO-reaktiven Gruppen der zur Kettenverlängerung eingesetzten Verbindungen zu freien NCO-Gruppen des Prepolymers liegt zwischen 40 bis 150 %, bevorzugt zwischen 70 bis 120 %, besonders bevorzugt zwischen 80 bis 120 %.

Die aminischen Komponenten [I.3), I.4), I.5)] können gegebenenfalls in wasser- oder lösemittelverdünnter Form im erfindungsgemäßen Verfahren einzeln oder in Mischungen eingesetzt werden, wobei grundsätzlich jede Reihenfolge der Zugabe möglich ist.

Wenn Wasser oder organische Lösemittel als Verdünnungsmittel mitverwendet werden so beträgt der Verdünnungsmittelgehalt bevorzugt 70 bis 95 Gew.-%.

Die Herstellung der PUR-Dispersion (I) aus den Prepolymeren erfolgt im Anschluss an die Kettenverlängerung. Dazu wird das gelöste und kettenverlängerte Polyurethanpolymer gegebenenfalls unter starker Scherung, wie z.B. starkem Rühren, entweder in das Dispergierwasser eingetragen oder es wird umgekehrt das Dispergierwasser zu den Prepolymerlösungen gerührt. Bevorzugt wird das Wasser in das gelöste Prepolymer gegeben.

Das in den Dispersionen nach dem Dispergierschritt noch enthaltene Lösemittel wird üblicherweise anschließend destillativ entfernt. Eine Entfernung bereits während der Dispergierung ist ebenfalls möglich.

Je nach Neutralisationsgrad und Gehalt ionischer Gruppen kann die Dispersion sehr feinteilig eingestellt werden, so dass sie praktisch das Aussehen einer Lösung hat, aber auch sehr grobteilige Einstellungen sind möglich, die ebenfalls ausreichend stabil sind.

Der Feststoffgehalt der erfindungsgemäßen PUR-Dispersion (I) liegt zwischen 20 bis 70 Gew.-%, bevorzugt 30 bis 65 Gew.-% und besonders bevorzugt zwischen 35 bis 62 Gew.-%.

Als Vernetzer II) werden blockierte Polyisocyanate verwendet, die gegebenenfalls in wasserdispergierbarer bzw. wasserlöslicher Form vorliegen oder als wässrige Dispersion bzw. Lösung eingesetzt werden.

Die blockierten Polyisocyanate II) können in den Schlichten, enthaltend die erfindungsgemäßen PUR-Polymer-Dispersionen, in nichthydrophilierter Form enthalten sein, z.B. in dem sie bei der Herstellung der erfindungsgemäßen Polyurethandispersionen vor dem Dispergieren hinzugegeben werden, so dass die Polyurethandispersion emulgierend bzw. dispergierend auf das blockierte Polyisocyanat wirkt.

Die blockierten Polyaisocyanate II) können ebenso als wässrige Lösung oder Dispersion verwendet werden. Die Lösung oder Dispersion der Polyisocyanate II) weist einen Festkörpergehalt zwischen 10 bis 70 Gew.-%, bevorzugt von 20 bis 60 Gew.-% und besonders bevorzugt von 25 bis 50 Gew.-% auf und der Lösungsmittelanteil von G) an der Gesamtzusammensetzung ist bevorzugt kleiner 15 Gew.-% und besonders bevorzugt kleiner 10 Gew.-% und ganz besonders bevorzugt kleiner 5 Gew.-%.

Die blockierten Polyisocyanate II) weisen eine (mittlere) NCO-Funktionalität von 2,0 bis 5,0, bevorzugt von 2,3 bis 4,5, einen Gehalt an Isocyanatgruppen (unblockiert und blockiert) von 5,0 bis 27,0 Gew.-%, bevorzugt von 14,0 bis 24,0 Gew.-% und einen Gehalt an monomeren Diisocyanaten von weniger als 1 Gew.-%, bevorzugt weniger als 0,5 Gew.-% auf. Die Isocyanatgruppen der Polyisocyanate A) der wasserdispergierbaren bzw. wasserlöslichen blockierten Polyisocyanate II) liegen zu mindestens 50 %, bevorzugt zu mindestens 60 % und besonders bevorzugt zu mindestens 70 % in blockierter Form vor.

Die Herstellung der wasserdispergierbaren, blockierten Polyisocyanate II) kann nach bekannten Methoden des Standes der Technik (z.B. in der DE-A 2 456 469, Spalte 7-8, Beispiel 1-5 und DE-A 2 853 937 S. 21-26, Beispiel 1-9) erfolgen.

Für die Herstellung der wässrigen Lösung oder Dispersion, enthaltend die wasserdispergierbaren blockierten Polyisocyanate (II), werden im Allgemeinen solche Mengen an Wasser eingesetzt, dass die resultierenden Dispersionen bzw. Lösungen einen Feststoffgehalt von 10 bis 70 Gew.-%, bevorzugt 20 bis 60 Gew.-% und besonders bevorzugt 25 bis 50 Gew.-% aufweisen.

Beispiele für Komponente III) sind Polyesterpolymere, Polyurethane, Acrylpolymere, Vinylpolymere wie Polyvinylacetat, Polyurethandispersionen, Polyacrylatdispersionen, Polyurethan-Polyacrylat-Hybriddispersionen, Polyvinylether- bzw. Polyvinylesterdispersionen, Polystyrol- bzw. Polyacrylnitrildispersionen.

Als Komponente IV) werden den Schlichtezusammensetzungen Hilfs- und Zusatzstoffe zugegeben. Dies können Haftvermittler, Gleitmittel, Antistatika aber auch die dem Fachmann an sich gut bekannten Lackadditive wie Farbstoffe, Pigmente, Verlaufshilfsmittel, Licht- und Alterungsschutzmittel sowie UV-Absorber sein.

Als Haftvermittler können die bekannten Silan-Haftvermittler wie 3-Aminopropyltrimethoxy- bzw. -triethoxysilan, N-(2-Aminoethyl)-3-aminopropyltrimethoxysilan, 3-Glycidylpropyltrimethoxysilan, Vinyltrimethoxysilan, Vinyltriethoxysilan oder 3-Methacryloxypropyltriethoxysilan eingesetzt werden. Die Konzentration der Silanhaftvermittler in den erfindungsgemäßen Schichtezusammensetzungen beträgt bevorzugt 0,05 bis 2 Gew.-%, besonders bevorzugt 0,15 bis 0,85 Gew.-%, bezogen auf die gesamte Schlichtezusammensetzung.

Ebenfalls Gegenstand der vorliegenden Erfindung ist ein Verfahren zur Herstellung der erfindungsgemäßen Schlichtezusammensetzungen, dadurch gekennzeichnet, dass in einem Mischbehälter Wasser vorgelegt und unter Rühren das Bindemittel (I), der Härter (II) und anschließend das Gleitmittel (IV) und gegebenenfalls weitere Hilfsmittel aus Komponente (IV) zugesetzt werden, danach der pH-Wert (20°C) auf 5 bis 7 eingestellt und ein Hydrolysat eines Haftvermittlers aus Komponente (IV) zugesetzt wird.

Ferner können die Schlichtezusammensetzungen, enthaltend die erfindungsgemäßen PUR-Polymer-Dispersionen, ein oder mehrere nichtionische und/oder ionische Gleitmittel als Teil von Komponente IV) enthalten, wie Polyalkylenglykolether von Fettalkoholen oder Fettaminen, Polyalkylenglykolether und Glycerinester von Fettsäuren mit 12 bis 18 Kohlenstoffatomen, Polyalkylenglykole, höhere Fettsäureamide mit 12 bis 18 Kohlenstoffatomen von Polyalkylenglykolen und/oder Alkylenaminen, quartäre Stickstoffverbindungen, z.B. ethoxylierte Imidazoliniumsalze, Mineralöle und Wachse. Die Gleitmittel werden bevorzugt in einer Gesamtkonzentration von 0,05 und 1,5 Gew.-%, bezogen auf die gesamte Schlichtezusammensetzung, eingesetzt.

Die Schlichtezusammesetzungen können auch ein oder mehrere Antistatika enthalten. Beispielweise sind zu nennen Lithiumchlorid, Ammoniumchlorid, Cr-III-Salze, organische Titanverbindungen, Arylalkylsulfate- oder Sulfonate, Arylpolyglykolethersulfonate oder quartäre Stickstoffverbindungen. Die Antistatika werden bevorzugt in Konzentrationen von 0,01 bis 0,8 Gew.-% eingesetzt.

Die Herstellung der Schlichtezusammensetzungen kann nach den an sich bekannten Methoden erfolgen. Bevorzugt wird in einem geeigneten Mischbehälter Wasser vorgelegt und unter Rühren das Bindemittel, der Härter und anschließend das Gleitmittel und gegebenenfalls weitere Hilfsmittel aus Komponente IV) zugesetzt. Danach wird der pH-Wert auf 5 - 7 eingestellt und ein Hydrolysat eines Haftvermittlers aus Komponente IV) zugesetzt. Nach einer weiteren Rührzeit von 15 Minuten ist die Schlichtezusammensetzung gebrauchsfertig und kann gegebenenfalls nach pH-Wert Anpassung appliziert werden.

Die Schlichtenzusammensetzungen können über beliebige Methoden, beispielsweise mittels Sprüh- oder Walzapplikatoren auf ein geeignetes Substrat appliziert und ausgehärtet werden. Geeignete Substarte sind Glas- oder Kohlefasern.

Gegenstand der vorliegenden Erfindung sind auch Glas- oder Kohlefasern beschichtet mit einer Schlichtezusammensetzung enthaltend die erfindungsgemäßen wässrigen PUR-Polymer-dispersionen.

Für die beschlichteten Glasfasern sind sowohl die für die Glasseidenfabrikation verwendeten, bekannten Glastypen wie E-, A-, C-, und S- Glas nach DIN 1259-1 als auch die anderen an sich bekannten Erzeugnisse der Glasfaserhersteller geeignet. Unter den genannten Glastypen für die Herstellung von Endlosglasfasern besitzen die E-Glasfasern aufgrund ihrer Alkalifreiheit, hohen Zugfestigkeit und hohen Elastizitätsmodul die größte Bedeutung für die Verstärkung von Kunststoffen.

Das Verfahren zur Herstellung, das Verfahren der Beschlichtung und die Nachbearbeitung der Glasfasern ist bekannt und beispielsweise in K.L. Loewenstein "The Manufacturing Technology of Continuous Glass Fibres", Elsevier Scientific Publishing Corp., Amsterdam, London, New York, 1983, beschrieben.

### Beispiele:

Soweit nicht abweichend angegeben sind alle Prozentangaben als Gewichtsprozent zu verstehen.

### Verwendete Substanzen und Abkürzungen:

| | |
|---|---|
| Diaminosulfonat: | NH₂-CH₂CH₂-NH-CH₂CH₂-SO₃Na (45 %ig in Wasser) |
| Desmophen^{®} 2020: | Polycarbonatpolyol, OH-Zahl 56 mg KOH/g, zahlenmittleres Molekulargewicht 2000 g/mol (Bayer AG, Leverkusen, DE) |
| PolyTHF^{®} 2000: | Polytetramethylenglykolpolyol, OH-Zahl 56 mg KOH/g, zahlenmittleres Molekulargewicht 2000 g/mol (BASF AG, Ludwigshafen, DE) |
| PolyTHF^{®} 1000: | Polytetramethylenglykolpolyol, OH-Zahl 112 mg KOH/g, zahlenmittleres zahlenmittleres Molekulargewicht 1000 g/mol (BASF AG, Ludwigshafen, DE) |
| Polyether LB 25: | monofunktioneller Polyether auf Ethylenoxid-/Propylenoxidbasis zahlenmittleres Molekulargewicht 2250 g/mol, OH-Zahl 25 mg KOH/g (Bayer AG, Leverkusen, DE) |
| KV 1386 | Hydrophilierungsmittel (BASF AG, Ludwigshafen, DE |
| Breox^{®} 50-A 140 | Gleitmittel (BP-Chemicals, GB) |

Die Bestimmung der Festkörpergehalte erfolgte nach DIN-EN ISO 3251.

NCO-Gehalte wurden, wenn nicht ausdrücklich anders erwähnt, volumetrisch gemäß DIN-EN ISO 11909 bestimmt.

### Vernetzerdispersion (Komponente II):

147,4 g eines biuretgruppen-haltigen Polyisocyanates auf Basis von 1,6-Diisocyanatohexan (HDI) mit einem NCO-Gehalt von 23,0 % wurden mit 39,2 g Polyether LB 25 30 min bei 100 °C gerührt. Anschließend wurde innerhalb von 20 min 493,0 g Caprolactam unter Rühren so zugegeben, dass die Temperatur des Gemisches 110°C nicht überschritt. Es wurde solange bei 110 °C gerührt bis der theoretische NCO-Wert erreicht war. Danach wurde auf 90 °C abgekühlt und innerhalb von 2 min eine Mischung aus 152,5 des Hydrophilierungsmittels KV 1386 und 235,0 g Wassser zudosiert. Im Anschluß daran erfolgte die Dispergierung durch Zugabe von 3325,1 g Wasser. Nach einer Nachrührzeit von 2 h wurde eine lagerstabile wässrige Dispersion mit einem Festkörpergehalt von 30,0 % erhalten.

### Herstellung Polyamidpolyol

### Beispiel 1: Polyamidpolyol

In ein 2l Reaktionsgefäß mit Rührvorrichtung, Heizung und Rückflusskühler werden 748 g Isophorondiamin IPDA (8,8 Äquivalente Aminogruppen) unter Stickstoff eingewogen und unter Rühren auf 80°C aufgeheizt. Dann werden in 20 Minuten 1003,2 g Caprolacton (8,8 ,Äquivalente) zudosiert und die Temperatur auf 120 °C erhöht. Nach 3 Stunden bei 120°C wird abgekühlt und das viskose, klare Produkt abgefüllt.

### Beispiel 2: Vergleichsbeispiel PUR-Dispersion (Komponente I)

1530,0 g eines difunktionellen Polyesterpolyols auf Basis Adipinsäuresäure und Hexandiol (mittleres Molekulargewicht 1700 g/mol, OHZ = 66 mg KOH/g Substanz) und 67,50 g Polyether LB 25 wurde auf 65°C aufgeheizt. Anschließend wurde bei 65°C innerhalb von 5 min 455,1 g Isophorondiisocyanat zugegeben und solange bei 100°C gerührt bis der theoretische NCO-Wert von 4,6 % erreicht wurde. Das fertige Prepolymer wurde mit 2781 g Aceton bei 50°C gelöst und anschließend eine Lösung aus 139,1 g Isophorondiamin und 247,2 g Aceton innerhalb von 10 min zudosiert. Anschließend wurde eine Lösung aus 46,0 g Diaminosulfonat, 4,80 Hydrazinhydrat und 239,1 g Wasser innerhalb von 5 min zudosiert. Die Nachrührzeit betrug 15 min. Anschließend wurde innerhalb von 10 min durch Zugabe von 3057 g Wasser dispergiert. Es folgte die Entfernung des Lösemittels durch Destillation im Vakuum und es wurde eine lagerstabile PUR-Dispersion mit einem Festkörpergehalt von 40,1 % und einer Teilchengröße von 207 nm erhalten.

### Beispiel 3: PUR-Dispersion (Komponente I, erfindungsgemäß)

252,0 g eines difunktionellen Polyesterpolyols auf Basis Adipinsäuresäure und Hexandiol (mittleres Molgekulargewicht 1700 g/mol, OHZ = 66 mg KOH/g Substanz) und 11,3 g Polyether LB 25 und 19,7 g eines Polyamidpolyols gemäß Beispiel 1 wurde auf 65°C aufgeheizt. Anschließend wurde bei 65°C innerhalb von 5 min 49,7 g Isophorondiisocyanat und 37,6 g Hexamethylemdiisocyanat zugegeben und solange bei 100°C gerührt bis der theoretische NCO-Wert von 5,6 % erreicht wurde. Das Prepolymer wurde mit 658,2 g Aceton bei 50°C gelöst und anschließend eine Lösung aus 29,2 g Isophorondiamin und 51,9 g Aceton innerhalb von 10 min zudosiert. Anschließend wurde eine Lösung aus 9,7 g Diaminosulfonat, 1,0 g Hydrazinhydrat und 50,6 g Wasser innerhalb von 5 min zudosiert. Die Nachrührzeit betrug 15 min. Anschließend wurde innerhalb von 10 min durch Zugabe von 550,4 g Wasser dispergiert. Es folgte die Entfernung des Lösemittels durch Destillation im Vakuum und es wurde eine lagerstabile PUR-Dispersion mit einem Festkörpergehalt von 40,2 % und einer Teilchengröße von 172 nm erhalten.

### Anwendungsbeispiele

Die Herstellung der Zusammensetzungen wurde wie folgt durchgeführt:
In einem Mischbehälter wurde die Hälfte der angegebenen Wassermenge vorgelegt und unter Rühren nacheinander die erfindungsgemäßen PUR-Dispersionen, filmbildende Harze, Vernetzerdispersion und Gleitmittel (Breox^{®} 50-A 140, BP-Chemicals, GB) zugesetzt. Danach wurde der pH-Wert mit Essigsäure auf 5 - 7 eingestellt und ein nach Angaben des Herstellers hergestelltes Hydrolysat aus 3-Aminopropyl-triethoxysilan (A1100, UCC, New York, USA) als wässrige Haftvermittlerlösung zugesetzt. Nach einer weiteren Rührzeit von 15 Minuten war die Schlichte gebrauchsfertig.

Anschließend wurde gegebenenfalls nach Anpassung des pH-Wertes auf 5 - 7 die Schlichtezusammensetzungen auf Glasfasern appliziert. Die so beschlichteten Glasfasern wurden anschließend geschnitten, getrocknet und in Polyamid 6 bzw. Polyamid 6,6 (GF-Anteil = 30%) eincompoundiert.

**Tabelle 1 gibt die Schlichtezusammensetzungen im einzelnen wieder:**

| | **Schlichte 1** Vergleich | **Schlichte 2** erfindungsgemäß |
|---|---|---|
| **Wasser** | 42,0 kg | 42,0 kg |
| **PUR-Dispersion** | 12,0 kg | 12,0 kg |
| | Beispiel 2 | Beispiel 3 |
| **Vernetzerdispersion** | 8,0 kg | 8,0 kg |
| **Haftvermittler** | 0,6 kg | 0,6 kg |
| **Gleitmittel** | 0,4 kg | 0,4 kg |
| **Wasser** | 37,0 kg | 37,0 kg |
| **Gesamt** | 100,0 kg | 100,0 kg |
| **Polyamid 6,6** | | |
| **Zugfestigkeit [MPa]** | 191 | 192 |
| **Schlagzähigkeit ISO 179 1eU [kJ/m²]** | 75 | 87 |
| **Schlagzähigkeit ISO 180 1A [kJ/m²]** | 10 | 11 |
| **Polyamid 6** | | |
| **Zugfestigkeit [MPa]** | 179 | 181 |
| **Schlagzähigkeit ISO 179 leU [kJ/m²]** | 71 | 82 |
| **Schlagzähigkeit ISO 180 1A [kJ/m²]** | 10 | 12 |

Die ermittelten Schlagzähigkeiten sowohl in Polamid 6 als auch in Polyamid 6,6 belegen die signifikant Verbesserungen mit den erfindungemäßen Schlichten.

## Patentansprüche

1. Wässrige Polyurethan-Polyharnstoff-Polymer Dispersionen (PUR-Polymere) enthaltend Struktureinheiten gemäß Formel (I) 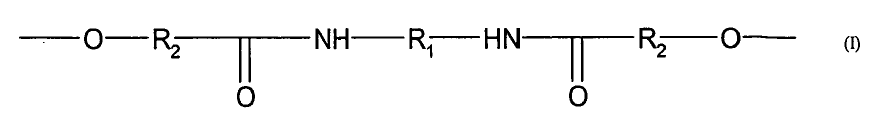 in welcher
R1 ein aliphatischer oder cycloaliphatischer Rest mit 2 bis 18 C-Atomen und
R2 ein aliphatischer Rest mit 3 bis 5 C-Atomen ist.

2. Wässrige Polyurethan-Polyharnstoff-Polymer Dispersionen gemäß Anspruch 1, **dadurch gekennzeichnet, dass** das PUR-Polymer mindestens 0,5 Gew.-% Amidgruppen, berechnet als (CO)NH, enthält.

3. Wässrige Polyurethan-Polyharnstoff-Polymer Dispersionen gemäß Anspruch 1, **dadurch gekennzeichnet, dass** Polyurethan-Polyharnstoff-Polymere (PUR-Polymere) als Aufbaukomponenten
I.1) Polyisocyanate,
I.2a) polymere Polyole mit zahlenmittleren Molekulargewichten von 200 bis 8000 g/mol,
I.2b) Polyamidpolyolen der allgemeinen Formel (II) 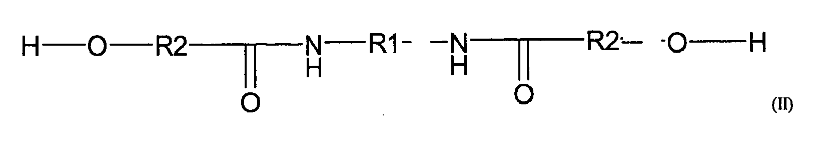 in welcher
R1 ein aliphatischer oder cycloaliphatischer Rest mit 2 bis 18 C-Atomen und
R2 ein aliphatischer Rest mit 3 bis 5 C-Atomen ist.
L3) niedermolekulare Verbindungen des Molgewichts 62 bis 400 die in Summe über zwei oder mehr Hydroxyl- und/oder Aminogruppen verfügen,
I.4) gegebenenfalls Verbindungen, die über eine Hydroxy- oder Aminogruppe verfügen, enthalten sowie mindestens ein oder mehrere Verbindungen ausgewählt aus der Gruppe der
I.5) isocyanatreaktiven, ionisch oder potentiell ionisch hydrophilierenden Verbindungen und/oder
I.6) isocyanatreaktiven, nichtionisch hydrophilierenden Verbindungen.

4. Wässrige Polyurethan-Polyharnstoff-Polymer Dispersionen gemäß Anspruch 1, **dadurch gekennzeichnet, dass** Komponente I.2a) Polyesterpolyole sind.

5. Wässrige Polyurethan-Polyharnstoff-Polymer Dispersionen gemäß Anspruch 1, **dadurch gekennzeichnet, dass** Komponente I.2b) aufgebaut ist aus Diaminen, die eine primäre und eine sekundäre Aminogruppe aufweisen und ε-Caprolacton.

6. Wässrige Polyurethan-Polyharnstoff-Polymer Dispersionen gemäß Anspruch 1, **dadurch gekennzeichnet, dass** Komponente I.2b) aufgebaut ist aus Umsetzungsprodukte aus Verbindungen ausgewählt aus der Gruppe 1,6-Hexamethylendiamin, 2-Methyl-1,5-diaminopentan, 1-Amino-3,3,5-trimethyl-5-aminomethyl-cyclohexan (Isophorondiamin), der Isomeren des Bis-(4-aminocyclohexyl)-methan und deren Mischungen mit e-Caprolacton.

7. Wässrige Polyurethan-Polyharnstoff-Polymer Dispersionen gemäß Anspruch 1 **dadurch gekennzeichnet, dass** eine Kombination aus ionischen und nicht-ionischen Hydrophilierungsmitteln entsprechend den Definitionen der Komponenten I.5) und I.6) verwendet wird.

8. Schlichtezusammensetzungen enthaltend (I) wässrige PUR-Polymer-Dispersionen gemäß Anspruch 1 und
(II) blockierte Polyisocyanate, deren Isocyanatgruppen zu mindestens 50 % blockiert sind und die gegebenenfalls hydrophiliert sind,
(III) gegebenenfalls weitere in Wasser dispergierbare, emulgierbare oder lösliche Polymere sowie
(IV) Hilfs- und Zusatzstoffe ausgewählt aus der Gruppe der Haftvermittler, Gleitmittel, Antistatika, Farbstoffe, Pigmente, Verlaufsmittel, Licht- und Alterungsschutzmittel oder UV-Absorber.

9. Verfahren zur Herstellung der Schlichtezusammensetzungen gemäß Anspruch 8, **dadurch gekennzeichnet, dass** in einem Mischbehälter Wasser vorgelegt und unter Rühren das Bindemittel (I), der Härter (II) und anschließend das Gleitmittel (IV) und gegebenenfalls weitere Hilfsmittel aus Komponente (IV) zugesetzt werden, danach der pH-Wert (20°C) auf 5 bis 7 eingestellt und ein Hydrolysat eines Haftvermittlers aus Komponente (IV) zugesetzt wird.

10. Verwendung der Schlichtezusammensetzung gemäß Anspruch 8 zur Herstellung von beschichteten Glas- und Kohlefasern.

11. Glasfaser beschichtet mit Schlichtezusammensetzung gemäß Anspruch 8.

12. Kohlefaser beschichtet mit Schlichtezusammensetzung gemäß Anspruch 8.
